# EUROPÄISCHE PATENTSCHRIFT

(11) **EP 2 179 263 B1**
(45) Veröffentlichungstag und Bekanntmachung des Hinweises auf die Patenterteilung: **15.12.2010**
(21) Anmeldenummer: 07801639.1
(22) Anmeldetag: 14.08.2007
(51) Int. Cl.: G01N 3/08, G01N 3/34, G01N 3/16

(54) **PRÜFVORRICHTUNG MIT EINEM ANTRIEB, DER EINE DREHBEWEGUNG IN EINE HIN- UND HERBEWEGUNG VERÄNDERLICHER AMPLITUDE UMWANDELT**
TESTING DEVICE WITH A DRIVE, WHICH CONVERTS A ROTATIONAL MOVEMENT INTO A RECIPROCATING MOVEMENT OF VARIABLE AMPLITUDE
DISPOSITIF DE TEST DOTÉ D'UN ENTRAÎNEMENT QUI CONVERTIT UN DÉPLACEMENT DE ROTATION EN UN DÉPLACEMENT DE VA-ET-VIENT D'AMPLITUDE VARIABLE

(43) Veröffentlichungstag der Anmeldung: 28.04.2010
(73) Patentinhaber: Aces Ingenieurgesellschaft mbH, Ludwigstrasse 26 70794 Filderstadt (DE)
(72) Erfinder: TRAUTWEIN, Frank, Thilo, 70794 Filderstadt (DE)
(74) Vertreter: Steimle, Josef
(86) Internationale Anmeldenummer: PCT/EP2007/007157
(87) Internationale Veröffentlichungsnummer: WO 2009/021534

(56) Entgegenhaltungen:
- CH-A- 422 381
- DE-A1- 2 900 373
- DE-A1- 3 102 778
- FR-A- 1 388 925
- US-A- 2 215 958
- US-A- 3 103 173

## Beschreibung

Die Erfindung betrifft eine Prüfvorrichtung zur statischen und dynamischen Prüfung von Werkstücken, mit einer ersten Einspannvorrichtung und einer zweiten Einspannvorrichtung für das Werkstück, und einem Antrieb zum Verschieben der zweiten Einspannvorrichtung.

Eine derartige Prüfvorrichtung ist aus der US-A-2 215 958 bekannt.

Der Prüfmaschine liegt das Prinzip der Huberzeugung mittels eines Kurbeltriebs zugrunde. Da für einige Bauteilprüfungen der Hub während des Betriebes kontinuierlich geregelt und damit einstellbar sein sollte, ist eine einfache Verstellmöglichkeit während des laufenden Betriebes, die zudem möglichst verschleißfrei arbeitet, vorteilhaft.

Eine Möglichkeit zur Verstellung der Amplitude während des Betriebes ist aus der GB 450 347 bekannt. Bei dieser Vorrichtung wird durch zwei Exzenter eine Schwinge angetrieben. Durch Verstellung der Phasenlage der Exzenter zueinander ergeben sich unterschiedliche Hübe, beginnend bei 0 bis hin zum doppelten Kurbelradius der Exzenter.

In der FR 1 388 925 wurde die Verbindung mit der Schwinge durch zwei Pleuel hergestellt. Dieser Mechanismus besitzt jedoch den Nachteil, dass damit keine beliebig geringen Hübe darstellbar sind. Dies ist zum einen für das "Anfahren" einer Prüfmaschine notwendig, da ansonsten möglicherweise nicht die erforderliche Schwungenergie des Antriebs aufgebracht werden kann, um die Probe der gewünschten Belastung auszusetzen, zum anderen kann der kleinstmögliche Hub bereits so groß sein, dass er die Probe überlastet.

Das Problem des nicht auf Null einstellbaren Hubes wurde durch die DE 29 00 373 C3 gelöst, indem insgesamt vier weitere Pleuel oder Schubstangen verwendet werden. Dadurch ist der Hub zwar wieder auf Null einstellbar, allerdings ist für das gezeigte Prinzip eine spezielle geometrische Abstimmung der Abmessungen notwendig. Durch die große Anzahl der verwendeten Gelenke und Bauteile (und damit der bewegten Massen), erscheint das Prinzip für eine zyklische Anwendung, die viele Jahre spiel- und verschleißfrei betrieben werden soll, als wenig geeignet.

Der Erfindung liegt daher die Aufgabe zugrunde, eine Prüfvorrichtung bereit zu stellen, die einfach aufgebaut ist, einen geringen Energieverbrauch besitzt, einem geringen Verschleiß unterliegt und bei der insbesondere eine Hubamplitude zwischen Null und einem maximalen Wert während des Betriebs einstell- und regelbar ist.

Diese Aufgabe wird mit einer Prüfvorrichtung der eingangs genannten Art erfindungsgemäß durch die Merkmale des kennzeichnenden Teils von Anspruch 1 gelöst.

Erfindungsgemäß sind die Kurbeltriebe auf einander gegenüberliegenden Seiten der Schwinge angeordnet. Durch diese Anordnungsmöglichkeit wird die Forderung, dass die Lenker gleichsinnig von den Enden der Schwinge abragen, auf einfache Weise realisiert.

Die Schwinge wird also von beiden Seiten mit Lenkern angetrieben, die, in der Grundstellung der Prüfvorrichtung, gleich an der Schwinge angeordnet sind, das heißt die im gleichen Winkel von der Schwinge abstehen. Die erfindungsgemäße Prüfvorrichtung besitzt den wesentlichen Vorteil, dass sie ausschließlich Drehlager aufweist. Außerdem ist eine Einstellung auf Nullhub möglich. Schließlich bedarf es nur einer geringen Anzahl an Bauteilen, die sich auf die Schwinge, die beiden Lenker und die beiden Kurbeltriebe beschränkt.

Die erfindungsgemäße Prüfvorrichtung weist einen sehr niedrigen Energieverbrauch im Vergleich zu servohydraulischen oder servopneumatischen Prüfmaschinen auf, da Hydraulikvorrichtungen hohe Leistungsverluste an Servoventilen besitzen, wodurch sich das Hydraulikmedium erwärmt, so dass weitere Energiezufuhr für dessen Kühlung erforderlich ist. Außerdem müssen die Hydraulikaggregate auf die maximale Kapazität des Lastrahmens und der damit betriebenen Hydraulikzylinder ausgelegt sein, weshalb sie bei mittleren und kleinen Prüflasten beziehungsweise Prüfwegen nicht effizient arbeiten. Die Erzeugung von Druckluft für servopneumatische Systeme ist ebenfalls ineffizient, überwiegend aufgrund der Wärmeentwicklung am Kompressor.

Die für die erfindungsgemäße Prüfvorrichtung verwendeten Teile werden in großen Stückzahlen für Standardanwendungen hergestellt und sind einfach ausgestaltet. Ferner ist die Wahl der Prüfparameter, wie die Frequenz, die Last und der Weg, absolut flexibel und nicht an Resonanzfrequenzen gebunden wie dies bei anderen Prüfmaschinen-Bauarten oft der Fall ist. Da alle Bauteile über biegeweiche Lager oder

Drehlager miteinander verbunden sind, ist eine Zwangsführung gegeben. Die Dynamik (Beschleunigung, Kraft/Weg) bei der zyklischen Prüfung kann damit auf höhere Werte eingestellt werden als dies bei Maschinen mit magnetischem Linearantrieb möglich ist.

Aufgrund der systembedingten Trägheit und konstruktiven Umsetzung der Rotationsbewegung in eine Hubbewegung ist eine sehr einfache Regelung beziehungsweise eine sehr hohe Regelgüte der Eingangsgrößen, wie zum Beispiel Kraft, Dehnung oder Weg, möglich, und zwar auch bei Proben, die ein stark nichtlineares Kraft-Weg-Verhalten aufzeigen.

Um die Belastung auf die Gelenke der einzelnen Bauteile zu reduzieren beziehungsweise um die Prüffrequenz erhöhen zu können, ist der Kurbeltrieb mit einem verstellbaren Exzenter, insbesondere mit einem Doppelexzenter, ausgebildet. Um sehr kleine Amplituden realisieren zu können, kann der Kurbelradius durch Verstellung des Exzenters auf diese kleine Amplitude gegebenenfalls auf die doppelte Größe dieser kleinen Amplitude eingestellt werden, wobei die Feineinstellung dann durch gegenseitige Winkelverstellung der Kurbeltriebe erfolgt. Die statische Einstellung mittels Doppelexzenter erfolgt zum Beispiel dadurch, dass zwei ineinander liegende Exzenter gegeneinander verstellt werden, wodurch auch ein Nullhub erzeugt werden kann.

Da eine Bauteilprüfung oftmals nicht nur mit einer Amplitude um die Nulllinie durchgeführt wird, sondern mitunter auch eine Vorspannung erforderlich ist, um welche dann das Bauteil mit einer Amplitude belastet wird, ist der Antrieb an einem Schlitten befestigt, und in Verschieberichtung zu der zweiten Einspannvorrichtung auf Zug oder Druck vorspannbar. Hierdurch wird eine Grundlast in Form einer Grundspannung beziehungsweise eines Drucks aufgebracht, um welche dann die Probe dynamisch belastet wird (Mittellast überlagert mit zyklischer Belastung). Dabei können die Kräfte so verteilt sein, dass sie sich ausschließlich im Druckbereich oder im Zugbereich befinden oder abwechselnd Zug- und Druckkräfte aufgebracht werden.

Mit der erfindungsgemäßen Prüfvorrichtung können Zugversuche und Dauerschwingversuche in statischen und dynamischen Betriebsarten durchgeführt werden. Ferner können die Prüfvorrichtung und die Aktuatoren flexibel aufgestellt und angeordnet werden, wobei eine Anordnung in einem Lastrahmen oder zur Montage auf einer Spannplatten möglich ist.

Weiterhin besteht die Möglichkeit der Synchronisierung mehrerer Vorrichtungen durch eine elektronische Synchronisation der Antriebsmotoren zueinander. Dies dient zur mehrachsigen Belastungsaufbringung an Proben.

Erfindungsgemäß ist dabei der Schlitten mechanisch, zum Beispiel mittels einer Gewindespindel oder Zahnstange, oder hydraulisch verfahrbar. Zur exakten Einstellung dieser Vorspannkraft ist zum Beispiel eine Kraftmessdose vorgesehen, die insbesondere mit der Probe verbunden ist.

Eine Variante der Erfindung sieht vor, dass das Werkstück eine Probe oder ein Hydraulikzylinder ist. Mittels des Hydraulikzylinders kann das Hydraulikmedium zum Beispiel auf eine externe Probe aufgegeben werden, die zum Beispiel unter schwankendem Innendruck belastet wird.

Es können auch Bauteile mit einem Außendruck geprüft werden, indem ein Hydraulikzylinder zur Umsetzung des mechanischen Antriebs auf einen hydraulischen Druck verwendet wird, was energieeffizienter ist, als eine Druckerzeugung mittels Hydraulikaggregat und Regelung per Servoventil.

Andererseits kann das Hydraulikmedium an einen zweiten, externen Hydraulikzylinder weitergegeben werden, mit dem ein schwer zugängliches oder großes Bauteil belastet wird. Durch das Zusammenschalten mehrerer Prüfvorrichtungen mit jeweils daran angeschlossenen Hydraulikzylindern zur Kraftweitergabe auf eine Probe können Kräfte in verschiedenen Richtungen angreifen, um zum Beispiel auch mehrachsige Belastungszustände zu prüfen.

Weitere Anwendungsgebiete für die erfindungsgemäße Vorrichtung sind unter anderem Stanzen, Pressen, Pumpen, Rüttelsiebe, Prüfmaschinen für Rütteltests oder sonstige oszillierende Geräte bei denen eine Verstellmöglichkeit der Hub-Amplitude während des Betriebes notwendig oder vorteilhaft ist.

Weitere Vorteile, Merkmale und Einzelheiten der Erfindung ergeben sich aus den Unteransprüchen sowie der nachfolgenden Beschreibung, in der unter Bezugnahme auf die Zeichnung besonders bevorzugte Ausführungsbeispiele im Einzelnen beschrieben sind. Dabei können die in Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Figur 1: eine erste Variante der erfindungsgemäßen Prüfvorrichtung;
- Figur 2: eine zweite Variante der erfindungsgemäßen Prüfvorrichtung;
- Figur 3: eine Prinzipdarstellung des Antriebs bei Nullhub;
- Figur 4: eine Prinzipdarstellung des Antriebs mit mittlerem Hub;
- Figur 5: eine Prinzipdarstellung des Antriebs bei Maximalhub;
- Figur 6: verschiedene Darstellungen eines Doppelexzenters;
- Figur 7: eine Prinzipskizze des Antriebs; und
- Figur 8: eine weitere Variante der erfindungsgemäßen Prüfvorrichtung.

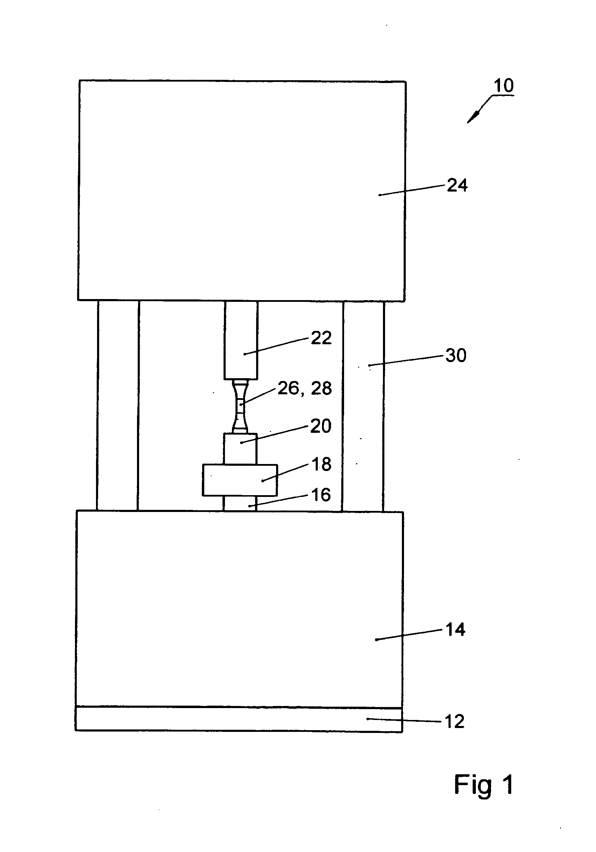

In der Figur 1 ist eine erste Variante einer insgesamt mit 10 bezeichneten Prüfvorrichtung dargestellt, bei der in einem Maschinenständer 12 ein erster Aktuator 14 für eine quasi statische Hubbewegung, das heißt für eine Mittellasteinstellung, vorgesehen ist. Dieser erste Aktuator 14 ist über eine starre Verbindung 16 mit einem Kraftaufnehmer 18 verbunden, welcher in einer ersten Einspannvorrichtung 20 endet. Dieser ersten Einspannvorrichtung 20 liegt eine zweite Einspanvorrichtung 22 gegenüber, welche von einem zweiten Aktuator 24 für eine zyklische (dynamische) Hubbewegung angetrieben wird. Zwischen den beiden Einspannvorrichtungen 20 und 22 ist ein Werkstück 26, insbesondere eine Probe 28, eingespannt. Die Position des Aktuators 24 ist je nach Probengröße entlang des Lastrahmens 30 einstell- und fixierbar.

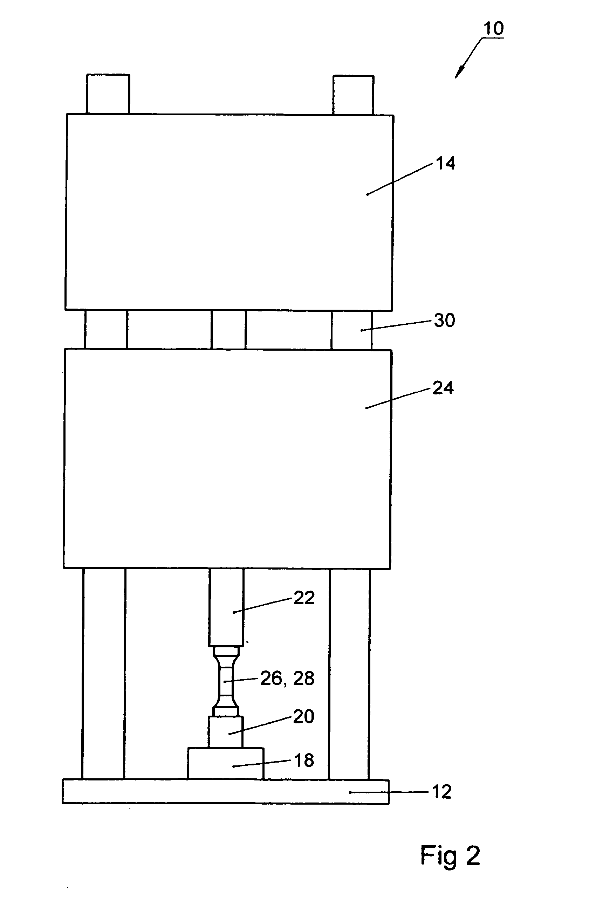

In der Variante der Erfindung gemäß Figur 2 ist der Kraftaufnehmer 18 direkt mit dem Maschinenständer 12 verbunden, wobei der zweite Aktuator 24 mittels des ersten Aktuators 14 verschieblich entlang des Lastrahmens 30 des Maschinenständers 12 angeordnet ist, wodurch eine Vorspannkraft oder ein Druck auf das Werkstück 26 aufgebracht wird.

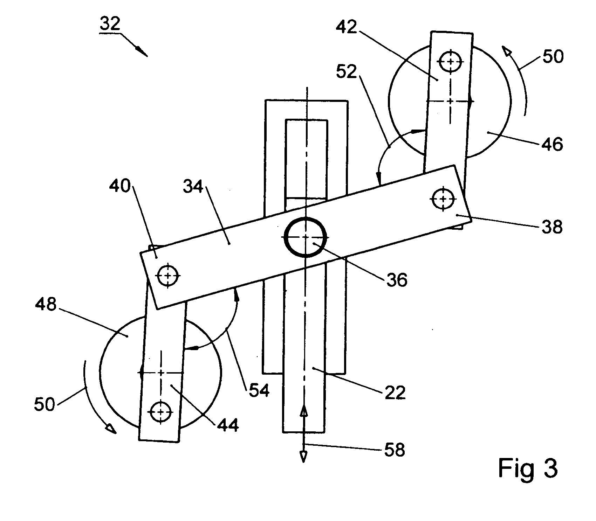

In der Figur 3 ist der im zweiten Aktuator 24 vorgesehene Antrieb 32 in seiner Grundstellung, das heißt bei Nullhub, dargestellt. Dieser Antrieb 32 besitzt eine Schwinge 34, in deren Mittelpunkt 36 die zweite Einspannvorrichtung 22 über ein biegeweiches Lager (z.B. durch ein elastischen Blechstreifen) oder durch ein Drehlager gelagert ist. An den freien Enden 38 und 40 der Schwinge 34 ist jeweils ein Lenker 42 und 44 drehbar gelagert. Die Lenker 42 und 44 sind ihrerseits jeweils drehbar an einem Kurbeltrieb 46 und 48 festgelegt. Diese Kurbeltriebe 46 und 48 können zum Beispiel in Richtung der Pfeile 50 umlaufen, wobei jedoch auch ein Umlauf entgegen der Richtung der Pfeile 50 möglich ist. Außerdem ist ein gegensinniger Umlauf der beiden Kurbeltriebe 46 und 48 möglich.

In dieser Lage der Kurbeltriebe 46 und 48, die auf gegenüberliegenden Seiten der Schwinge 34 beziehungsweise punktsymmetrisch zum Mittelpunkt 36 der Schwinge 34 angeordnet sind, verbleibt die zweite Einspannvorrichtung 22 in Ruhe (Nullhub), wenn die Kurbeltriebe 46 und 48 umlaufen. Es sei noch angemerkt, dass die Kurbeltriebe 46 und 48 gleichzeitig und in der Regel mit gleicher Geschwindigkeit umlaufen. Die Lenker 42 und 44 ragen gleichsinnig von der Schwinge 34 ab, so dass die Winkel 52 und 54 gleich groß sind.

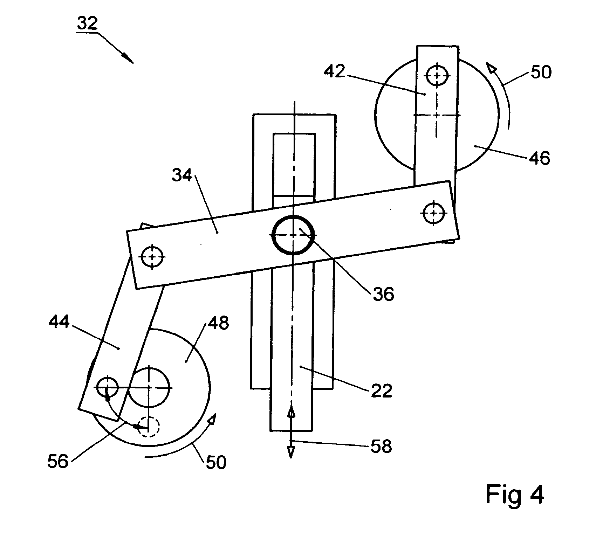

Die Figur 4 zeigt ebenfalls den Antrieb 32, wobei jedoch der Kurbeltrieb 48 um 90° (Winkel 56) im Uhrzeigersinn (mathematisch negativ) verdreht ist. Werden in dieser Stellung der beiden Kurbeltriebe 46 und 48 gleichzeitig gedreht, vollzieht die zweite Einspannvorrichtung 22 eine oszillierende Hubbewegung 58, die zum Beispiel 28 mm beträgt.

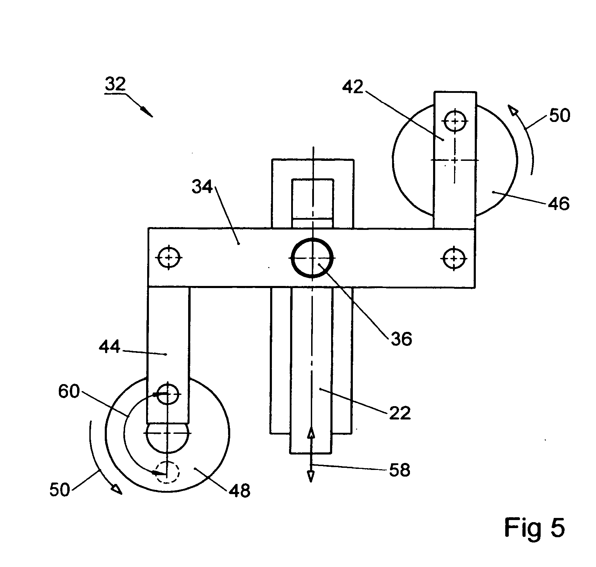

In der Figur 5 ist der Kurbeltrieb 48 gegenüber der Stellung gemäß Figur 3 um 180° in Richtung des Uhrzeigersinns (Winkel 60) verdreht. Werden nunmehr die beiden Kurbeltriebe 46 und 48 in Drehbewegung (Pfeile 50) versetzt, vollzieht die zweite Einspannvorrichtung 22 wiederum eine Hubbewegung 58, die nunmehr aber einer maximalen Hubbewegung von zum Beispiel 40 mm entspricht. Es ist aus den Figuren 3 bis 5 deutlich erkennbar, dass durch die relative Winkelverstellung des Kurbeltriebs 48 gegenüber dem Kurbeltrieb 46 eine Längenänderung der Hubbewegung 58 eingestellt werden kann. In Weiterbildung der Erfindung kann zusätzlich auch der Kurbeltrieb 46 verstellt werden.

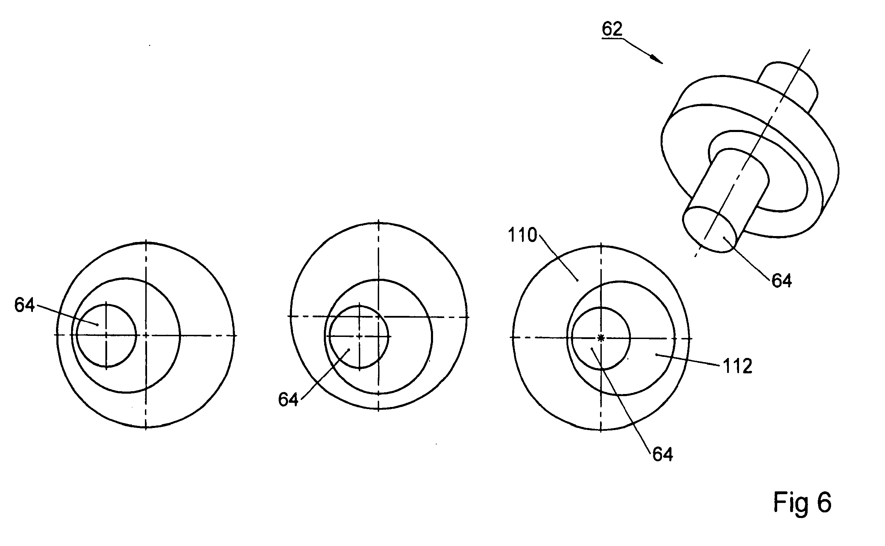

Eine einfache Verstellung des Kurbelradius des Kurbeltriebs 46 beziehungsweise 48 kann zum Beispiel dadurch erzielt werden, dass der Kurbeltrieb 46 beziehungsweise 48 von einem Doppelexzenter 62 gebildet wird. In der Figur 6 ist ein derartiger Doppelexzenter 62 in perspektivischer Darstellung sowie in drei Exzenterstellungen gezeigt. Die Hubverstellung wird dadurch erreicht, dass eine zweite Exzenterscheibe 112 in einer exzentrischen Bohrung einer ersten Exzenterscheibe 110 aufgenommen ist, wobei der Lagerzapfen 64 wiederum exzentrisch in der zweiten Exzenterscheibe 112 aufgenommen ist.

Die links dargestellte Exzenterstellung zeigt den maximalen Hub, bei der der Lagerzapfen 64 seine maximale Entfernung vom Zentrum des Doppelexzenters 62 einnimmt. In der rechts dargestellten Exzenterstellung befindet sich der Lagerzapfen 64 genau im Zentrum des Doppelexzenters. Dies wird dadurch erreicht, dass die erste Exzenterscheibe 110 um 180° gedreht wird und die zweite Exzenterscheibe 112 ihre Ausrichtung beibehält. Die mittlere Darstellung zeigt eine Zwischenstellung, bei der die erste Exzenterscheibe 110 um 90° entgegen dem Uhrzeigersinn gedreht wird. Die einzelnen Stellungen der Exzenterscheiben 110 und 112 und des Lagerzapfens 64 können zum Beispiel hydraulisch oder mechanisch gespannt werden.

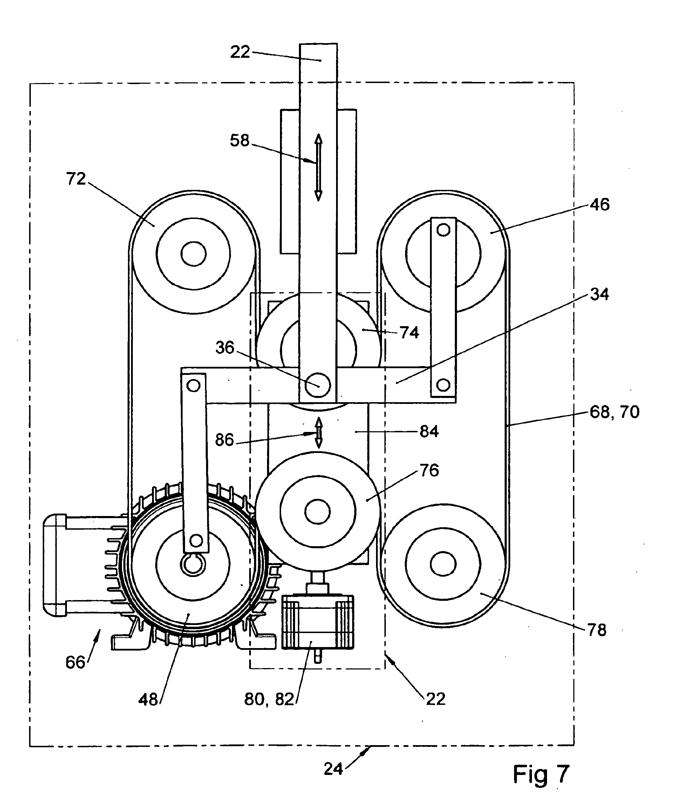

In der Figur 7 sind mit 22 ein Aktuator zur Winkelverstellung des Kurbeltriebes 46 und 48, und mit 24 der zweite Aktuator zur Erzeugung eines oszillierenden Hubes bezeichnet. Außerdem ist ein Antriebsmotor 66, z.B. ein Synchronmotor oder ein Servomotor, dargestellt, der den zweiten Kurbeltrieb 48 direkt oder indirekt über ein Getriebe antreibt. Der erste Kurbeltrieb 46 wird über ein Treibmittel 68, zum Beispiel einen Zahnriemen 70, angetrieben, welcher den zweiten Kurbeltrieb 48 sowie vier Umlenkscheiben 72 bis 78 umschlingt. Mit dem Bezugszeichen 80 ist eine Verstellvorrichtung, zum Beispiel ein Spindeltrieb 82, bezeichnet, mit welchem ein Schlitten 84 in Richtung des Pfeils 86 verstellt wird. Mit der Verstellvorrichtung 80 wird die Position der Umlenkrollen 74 und 76 gegenüber den Kurbeltrieben 46 und 48 verändert. Durch diese Veränderung wird die relative Winkellage der Kurbeltriebe zueinander eingestellt, indem die gezogene Länge des Treibmittels zwischen den beiden Kurbeltrieben 46 und 48 verkürzt oder verlängert wird. Da bei einer Verlagerung des Schlittens 84 die beiden Umlenkscheiben 74 und 76 gleichzeitig verstellt werden, ändert sich in der gezeigten Anordnung die Treibmittellänge bei einer Verstellung nicht und es bedarf keiner Nachspannung des Treibmittels 68 aufgrund veränderter Positionen der Umlenkrollen 74 und 76.

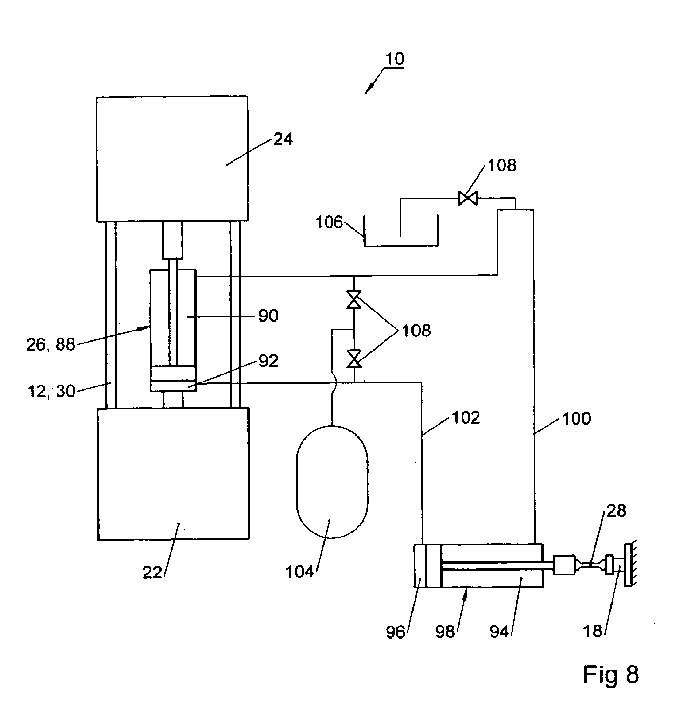

In der Figur 8 ist eine dritte Variante der erfindungsgemäßen Prüfvorrichtung dargestellt, bei welcher das Werkstück 26 als Hydraulikzylinder 88 ausgebildet ist. Die Druckräume 90 und 92 des Hydraulikzylinders 88 sind mit Druckräumen 94 und 96 eines zweiten Hydraulikzylinders 98 mittels Hydraulikleitungen 100 und 102 verbunden. Der zweite Hydraulikzylinder 98 greift nun an einer Probe 28 an und überträgt die im ersten Hydraulikzylinder 88 erzeugten Hubbewegungen. Auf diese Weise können z.B. schwer zugängliche oder sehr große Proben 28 geprüft werden. Ferner sind in Figur 8 ein Druckspeicher 104 sowie ein Tank 106 erkennbar. Die Verbindungen zum Druckspeicher und zum Tank 6 sind mittels Magnetventilen 108 absperrbar.

## Patentansprüche

1. Prüfvorrichtung (10) zur statischen und dynamischen Prüfung von Werkstücken (26), mit einer ersten Einspannvorrichtung (20) und einer zweiten Einspannvorrichtung (22) für das Werkstück (26), und einem Antrieb (32) zum Verschieben der zweiten Einspannvorrichtung (22), **dadurch gekennzeichnet, dass** der Antrieb (32) eine Schwinge (34) aufweist, an der die zweite Einspanneinrichtung (22) drehbar gelagert ist und die beiden Enden der Schwinge (34) mit jeweils einem drehbar gelagerten Lenker (42, 44) verbunden sind und die freien Enden der Lenker (42, 44) mit jeweils einem Kurbeltrieb (46, 48) gekoppelt sind, und
dass die Kurbeltriebe (46, 48) stets auf einander gegenüberliegenden Seiten der Schwinge (34) angeordnet sind und dass die Lenker (42, 44) in der Grundstellung des Antriebs (32), d.h. wenn die zweite Einspannvorrichtung (22) die Amplitude Null aufweist, gleichsinnig von den Enden der Schwinge (34) abragen, wenn man vom Mittelpunkt der Schwinge (34) in Richtung deren Enden blickt.

2. Prüfvorrichtung nach Anspruch 1, **dadurch gekennzeichnet, dass** die zweite Einspanneinrichtung (22) am Mittelpunkt (36) der Schwinge (34) drehbar gelagert ist.

3. Prüfvorrichtung nach einem der vorhergehenden Ansprüche, **dadurch gekennzeichnet, dass** die zweite Einspanneinrichtung (22) am Mittelpunkt (36) der Schwinge (34) durch ein biegeweiches Lager mit der Schwinge verbunden ist.

4. Prüfvorrichtung nach einem der vorhergehenden Ansprüche, **dadurch gekennzeichnet, dass** die beiden Lenker (42, 44) durch ein biegeweiches Lager mit den Enden der Schwinge (34) verbunden sind.

5. Prüfvorrichtung nach einem der vorhergehenden Ansprüche, **dadurch gekennzeichnet, dass** die Kurbeltriebe (46, 48) jeweils einen verstellbaren Exzenter aufweisen.

6. Prüfvorrichtung nach einem der vorhergehenden Ansprüche, **dadurch gekennzeichnet, dass** mindestens einer der Kurbeltriebe (46 und/oder 48) als Doppelexzenter (62) ausgebildet ist.

7. Prüfvorrichtung nach einem der vorhergehenden Ansprüche, **dadurch gekennzeichnet, dass** die Kurbeltriebe (46, 48) einen Antrieb für einen gleich- oder gegensinnigen Umlauf aufweisen.

8. Prüfvorrichtung nach einem der vorhergehenden Ansprüche, **dadurch gekennzeichnet, dass** die Kurbeltriebe (46, 48) jeweils durch einen eigenen Elektromotor mit gleicher Drehzahl antreibbar sind, wobei die gewünschte relative Winkelstellung der beiden Kurbeltriebe durch die genaue Phasenregelung der Elektromotoren einstellbar ist.

9. Prüfvorrichtung nach einem der vorhergehenden Ansprüche, **dadurch gekennzeichnet, dass** die Kurbeltriebe (46, 48) jeweils durch einen eigenen Elektromotor mit unterschiedlicher Drehzahl antreibbar sind, wobei sich aufeinanderfolgende Hübe in deren Amplitude unterscheiden.

10. Prüfvorrichtung nach einem der vorhergehenden Ansprüche, **dadurch gekennzeichnet, dass** die Kurbeltriebe (46, 48) durch ein Treibmittel (68, 70) miteinander verbunden sind, wobei die Länge des unter Zug stehenden Abschnitts des Treibmittels (68, 70) zwischen den beiden Kurbeltrieben (46, 48) durch eine Positionsänderung von über einen Schlitten (84) verbundenen Umlenkrollen (74, 76) einstellbar ist, was wiederum eine Winkelstellungsänderung der Kurbeltriebe (46, 48) zueinander zur Folge hat.

11. Prüfvorrichtung nach Anspruch 10, **dadurch gekennzeichnet, dass** der Schlitten (84) mechanisch mittels einer Verstellvorrichtung, z.B. einer Gewindespindel (82), hydraulisch oder pneumatisch verfahrbar ist und damit die Position der Umlenkrollen (74, 76) verändert.

12. Prüfvorrichtung nach einem der vorhergehenden Ansprüche, **dadurch gekennzeichnet, dass** die erste Einspannvorrichtung (20) zusätzlich mit einem quasi-statisch wirkenden Aktuator (14) verbunden ist, welcher geeignet ist, eine Verschiebung des Werkstücks (26) gegenüber einem zweiten Aktuator (24) zu erzielen und **dadurch** für eine Vorspannung auf das Werkstück (26) zu sorgen.

13. Prüfvorrichtung nach einem der vorhergehenden Ansprüche, **dadurch gekennzeichnet, dass** der zyklische Antrieb (32) in eine dynamische Aktuator-Einheit (24) integriert ist, und ein quasi-statisch wirkender Aktuator (14) starr mit der dynamischen Aktuator-Einheit (24) verbunden ist, so dass der statische Aktuator (14) die Position der dynamischen Aktuator-Einheit (24) derart verändert, dass eine Vorspannung auf das Werkstück (26) entsteht, welche durch die zyklischen Hübe der dynamischen Aktuator-Einheit (24) noch überlagert werden.

14. Verwendung einer Prüfvorrichtung nach einem der vorhergehenden Ansprüche, **dadurch gekennzeichnet, dass** als Werkstück (26) wahlweise eine Probe (28) oder ein Hydraulikzylinder (88) eingespannt wird.

15. Verwendung einer Prüfvorrichtung nach Anspruch 14, **dadurch gekennzeichnet, dass** der Hydraulikzylinder (88) zum hydraulischen Antrieb eines extern angeordneten zweiten Hydraulikzylinders (98) dient.

16. Verwendung einer Prüfvorrichtung nach einem der vorhergehenden Ansprüche, **dadurch gekennzeichnet, dass** mehrere derartige Prüfvorrichtungen (10) gleichzeitig durch elektronische Synchronisierung der Antriebe (32) synchron oder bewusst asynchron verwendet werden und auf ein Werkstück (26) oder eine Probe (28) einwirken.

## Claims

1. Test device (10) for the static and dynamic testing of workpieces (26), having a first clamping device (20) and a second clamping device (22) for the workpiece (26), and a drive (32) for moving the second clamping device (22), **characterized by** the drive (32) having a rocker (34) on which the second clamping device (22) is mounted in a rotatable manner, and the two ends of the rocker (34) are each connected to a rotatably mounted connecting rod (42, 44), and the free ends of the connecting rods (42, 44) are each coupled to a crank mechanism (46, 48), and that the crank mechanisms (46, 48) are arranged on opposite sides of the rocker (34) and in that the connecting rods (42, 44) project from the ends of the rocker (34) in the same direction in the starting position of the drive (32), i.e. when the clamping device (22) has the amplitude zero, when viewed from the center point of the rocker (34) in the direction of the ends thereof.

2. Test device according to claim 1, **characterized in that** the second clamping device (22) is rotatably mounted at the center point (36) of the rocker (34).

3. Test device according to one of the preceding claims, **characterized in that** the second clamping device (22) is connected to the rocker (34) at the center point (36) thereof by means of a flexurally soft bearing.

4. Test device according to one of the preceding claims, **characterized in that** the two connecting rods (42, 44) are connected to the ends of the rocker (34) by means of a flexurally soft bearing.

5. Test device according to one of the preceding claims, **characterized in that** the crank mechanisms (46, 48) each have an adjustable cam.

6. Test device according to one of the preceding claims, **characterized in that** the crank mechanism (46, 48) is in the form of a twin cam (62).

7. Test device according to one of the preceding claims, **characterized in that** the crank mechanisms (46, 48) rotate in the same or opposite directions.

8. Test device according to one of the preceding claims, **characterized in that** the crank mechanisms (46, 48) can each be driven at the same speed by their own electric motor, where the desired relative angular position of the two crank mechanisms can be adjusted by precise phase regulation of the electric motors.

9. Test device according to one of the preceding claims, **characterized in that** the crank mechanisms (46, 48) can each be driven at different speeds by their own electric motor, where successive strokes differ in amplitude.

10. Test device according to one of the preceding claims, **characterized in that** the crank mechanisms (46, 48) are connected to one another by a drive means (68, 70), where the length of the section of the drive means (68, 70) under tension between the two crank mechanisms (46, 48) can be adjusted by a change in the position of guide rolls (74, 76), which in turn has the consequence of a change in the angular position of the crank mechanisms (46, 48) with respect to one another.

11. Test device according to claim 10, **characterized in that** the carriage (84) can be moved mechanically, for example by means of a threaded spindle (82), hydraulically or pneumatically and the position of the guide rolls (74, 76) thus changed.

12. Test device according to one of the preceding claims, **characterized in that** the first clamping device (20) is additionally connected to a quasi-statically acting actuator (14), which is suitable for achieving displacement of the workpiece (26) relative to a second actuator (24) and thus producing a prestress of the workpiece (26).

13. Test device according to one of the preceding claims, **characterized in that** the cyclic drive (32) is integrated into a dynamic actuator unit (24), and a quasi-statically acting actuator (14) is rigidly connected to the dynamic actuator unit (24), so that the static actuator (14) changes the position of the dynamic actuator unit (24) so as to produce a prestress of the workpiece (26), on which the cyclic strokes of the dynamic actuator unit (24) are superimposed.

14. Use of a test device according to one of the preceding claims, **characterized in that** a sample (28) or a hydraulic cylinder (88) is clamped in for the workpiece (26).

15. Use of a test device according to claim 14, **characterized in that** the hydraulic cylinder (88) hydraulically drives an externally arranged second hydraulic cylinder (98).

16. Use of a test device according to one of the preceding claims, **characterized in that** a plurality of test devices (10) are simultaneously used synchronously or intentionally asynchronously and act on a workpiece (26) or a sample (28) through electronic synchronization of the drives (32).

## Revendications

1. Dispositif de test (10) destiné à tester statiquement et dynamiquement des pièces (26), comprenant un premier dispositif de serrage (20) et un second dispositif de serrage (22) pour la pièce (26), et un entraînement (32) pour le déplacement du second dispositif de serrage (22), **caractérisé en ce que** l'entraînement (32) présente un balancier (34) sur lequel le second dispositif de serrage (22) est monté à rotation et les deux extrémités du balancier (34) sont reliés à une bielle (42, 44) respective montée à rotation et les extrémités libres des bielles (42, 44) sont accouplés à un entraînement à manivelle (46, 48) respectif et **en ce que** les commandes à manivelle (46, 48) sont disposées toujours sur des côtés se faisant face du balancier (34) et **en ce que**, dans la position de base de l'entraînement (32), c'est-à-dire lorsque le second dispositif de serrage (22) présente l'amplitude zéro, les bielles (42, 44) débordent dans le même sens des extrémités du balancier (34) lorsqu'on regarde à partir du centre du balancier (34) en direction de ses extrémités.

2. Dispositif de test selon la revendication 1, **caractérisé en ce que** le second dispositif de serrage (22) est monté à rotation au centre (36) du balancier (34).

3. Dispositif de test selon l'une quelconque des revendications précédentes, **caractérisé en ce que** le second dispositif de serrage (22) est relié par un palier souple en flexion au balancier (34) au centre (36) du balancier (34).

4. Dispositif de test selon l'une quelconque des revendications, **caractérisé en ce que** les deux bielles (42, 44) sont reliées par un palier souple en flexion aux extrémités du balancier (34).

5. Dispositif de test selon l'une quelconque des revendications précédentes, **caractérisé en ce que** les entraînements à manivelle (46, 48) présentent chacun un excentrique réglable.

6. Dispositif de test selon l'une quelconque des revendications précédentes, **caractérisé en ce qu'**au moins l'un des entraînements à manivelle (46 et/ou 48) est conçu sous forme de double excentrique (62).

7. Dispositif de test selon l'une quelconque des revendications précédentes, **caractérisé en ce que** les entraînements à manivelle (46, 48) présentent un entraînement pour une rotation dans le même sens ou dans le sens contraire.

8. Dispositif de test selon l'une quelconque des revendications précédentes, **caractérisé en ce que** les entraînements à manivelle (46, 48) peuvent être entraînés respectivement par un propre moteur électrique à régime identique, la position angulaire relative souhaitée des deux entraînements à manivelle pouvant être réglée par le réglage de phase précis des moteurs électriques.

9. Dispositif de test selon l'une quelconque des revendications précédentes, **caractérisé en ce que** les entraînements à manivelle (46, 48) peuvent être entraînés respectivement par un propre moteur électrique à régime différent, des courses successives se différenciant dans leur amplitude.

10. Dispositif de test selon l'une quelconque des revendications précédentes, **caractérisé en ce que** les entraînements à manivelle (46, 48) sont reliés les uns aux autres par un moyen d'entraînement (68, 70), la longueur de la partie mise sous traction du moyen d'entraînement (68, 70) entre les deux entraînements à manivelle (46, 48) pouvant être réglée par un changement de position de galets de renvoi (74, 76) reliés par un coulisseau (84), ce qui entraîne à son tour un changement de la position angulaire des entraînements à manivelle (46, 48).

11. Dispositif de test selon la revendication 10, **caractérisé en ce que** le coulisseau (84) peut être déplacé de façon mécanique au moyen d'un dispositif de réglage, par exemple une tige filetée (82), de façon hydraulique ou pneumatique, et modifie ainsi la position des galets de renvoi (74, 76).

12. Dispositif de test selon l'une quelconque des revendications précédentes, **caractérisé en ce que** le premier dispositif de serrage (20) est relié en supplément à un actionneur (14) agissant quasiment de façon statique, lequel est approprié pour obtenir un déplacement de la pièce (26) par rapport à un second actionneur (24) et garantir ainsi une précontrainte exercée sur la pièce (26).

13. Dispositif de test selon l'une quelconque des revendications précédentes, **caractérisé en ce que** l'entraînement (32) cyclique est intégré dans une unité actionneur (24) dynamique, et un actionneur (14) agissant quasiment de façon statique est relié de façon rigide à l'unité actionneur (24) dynamique, de sorte que l'actionneur (14) statique modifie la position de l'unité actionneur (24) dynamique de telle sorte qu'il se forme une précontrainte exercée sur la pièce (26) qui est superposée encore par les courses cycliques de l'unité actionneur (24) dynamique.

14. Utilisation d'un dispositif de test selon l'une quelconque des revendications précédentes, **caractérisée en ce que**, comme pièce (26), on monte au choix une éprouvette (28) ou un vérin hydraulique (88).

15. Utilisation d'un dispositif de test selon la revendication 14, **caractérisé en ce que** le vérin hydraulique (88) sert à l'entraînement hydraulique d'un second vérin hydraulique (98) disposé à l'extérieur.

16. Utilisation d'un dispositif d'essai selon l'une quelconque des revendications précédentes, **caractérisé en ce que** plusieurs dispositifs de test (10) de ce type sont utilisés simultanément par synchronisation électronique des entraînements (32), de façon synchrone ou sciemment asynchrone, et agissent sur une pièce (26) ou une éprouvette (28).
